(19) Europäisches Patentamt / European Patent Office / Office européen des brevets

(11) **EP 4 130 653 A1**

(12) **EUROPEAN PATENT APPLICATION**
published in accordance with Art. 153(4) EPC

(43) Date of publication:
**08.02.2023 Bulletin 2023/06**

(21) Application number: **21779290.2**

(22) Date of filing: **17.03.2021**

(51) International Patent Classification (IPC):
**G01B 15/06** (1968.09)   **G01S 13/88** (1980.01)

(86) International application number:
**PCT/CN2021/081219**

(87) International publication number:
**WO 2021/197064 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 CN 202010244765**

(71) Applicant: **Inner Moglia Longrun Information Science and Technology Limited Ordos, Inner Mongolia 017200 (CN)**

(72) Inventor: **YE, Lei Inner Mongolia 017200 (CN)**

(74) Representative: **Zaboliene, Reda Metida Business center Vertas Gyneju str. 16 01109 Vilnius (LT)**

(54) **DEFORMATION MEASUREMENT METHOD AND RADAR SYSTEM**

(57)    Disclosed are a method for measuring a deformation and a radar system. A first echo signal of a first monitoring point and a second echo signal of a second monitoring point of a monitoring target are obtained, a first line-of-sight deformation and a second line-of-sight deformation of the monitoring target are obtained according to the first echo signal and the second echo signal, and a vertical displacement and/or a horizontal displacement of the monitoring target are/is computed according to mounting parameters of a radar device, the first line-of-sight deformation and the second line-of-sight deformation. Thus, environment adaptability and measurement precision of the radar system can be improved, and the radar device is convenient to mount.

```
                                                    ┌─ S100
┌─────────────────────────────────────────────────┐
│ Obtain a first echo signal of a first monitoring │
│   point and a second echo signal of a second     │
│    monitoring point of a monitoring target       │
└─────────────────────────────────────────────────┘
                        │
                        ▼                 ┌─ S200
┌─────────────────────────────────────────────────┐
│ Obtain a first line-of-sight deformation of the  │
│  monitoring target according to the first echo   │
│                     signal                       │
└─────────────────────────────────────────────────┘
                        │
                        ▼                 ┌─ S300
┌─────────────────────────────────────────────────┐
│ Obtain a second line-of-sight deformation of the │
│  monitoring target according to the second echo  │
│                     signal                       │
└─────────────────────────────────────────────────┘
                        │
                        ▼                 ┌─ S400
┌─────────────────────────────────────────────────┐
│ Compute a vertical displacement and/or a horizontal │
│  displacement of the monitoring target according to │
│   mounting parameters of a radar device, the first  │
│  line-of-sight deformation and the second line-of-  │
│              sight deformation                      │
└─────────────────────────────────────────────────┘
```

Fig. 3

EP 4 130 653 A1

**Description**

CROSS-REFERENCE TO RELATED APPLICATIONS

The present application claims the priority to Chinese Patent Application No. 202010244765.5, filed on March 31, 2020 and entitled "method for measuring deformation and radar system", which is incorporated in its entirety herein by reference.

BACKGROUND OF THE INVENTION

1. Technical Field

The present disclosure relates to the technical field of radars, and in particular to a method for measuring a deformation and a radar system.

2. Description of Related Art

Radar differential interferometry is a remote sensing technology that utilizes echo phase information of a coherent radar system and obtains time-series radar echo signals for monitoring a deformation by means of repeated observation of the same target area at different times. Presently, the radar differential interferometry has been used for long-term monitoring and early warning of natural disasters such as landslides, glacier displacement, ground surface settlement, volcanic activity and earthquake deformation, as well as monitoring of large man-made buildings such as dams and bridges in the field of surface deformation monitoring, and can monitor a deformation in a long distance, large range and continuous space coverage.

However, the radar interferometry system in the prior art is susceptible to a mounting position and an external environment, thereby affecting a measurement result.

BRIEF SUMMARY OF THE INVENTION

In view of this, the objective of embodiments of the present disclosure is to provide a method for measuring a deformation and a radar system, which may improve environment adaptability and measurement precision of the radar system and make a radar device convenient to mount.

In a first aspect, an embodiment of the present disclosure provides a method for measuring a deformation. The method includes:

obtaining a first echo signal of a first monitoring point and a second echo signal of a second monitoring point of a monitoring target;
obtaining a first line-of-sight deformation of the monitoring target according to the first echo signal;
obtaining a second line-of-sight deformation of the monitoring target according to the second echo signal; and
computing a vertical displacement and/or a horizontal displacement of the monitoring target according to mounting parameters of a radar device, the first line-of-sight deformation and the second line-of-sight deformation,
where the first line-of-sight deformation is a displacement of the monitoring target in a direction of a connecting line between the radar device and the first monitoring point, and the second line-of-sight deformation is a displacement of the monitoring target in a direction of a connecting line between the radar device and the second monitoring point.

Preferably, the computing a vertical displacement and/or a horizontal displacement of the monitoring target according to mounting parameters of a radar device, the first line-of-sight deformation and the second line-of-sight deformation includes:

computing a first angle of incidence from the radar device to the first monitoring point according to the mounting parameters of the radar device, the first angle of incidence being an included angle between the connecting line between the radar device and the first monitoring point and a vertical direction;
computing a second angle of incidence from the radar device to the second monitoring point according to the mounting parameters of the radar device, the second angle of incidence being an included angle between the connecting line between the radar device and the second monitoring point and a vertical direction; and
computing the vertical displacement and/or the horizontal displacement of the monitoring target according to the first angle of incidence, the second angle of incidence, the first line-of-sight deformation and the second line-of-sight deformation.

Preferably, the mounting parameters of the radar device include a mounting height of the radar device, a first horizontal distance from the radar device to the first monitoring point, and a second horizontal distance from the radar device to the second monitoring point; and

the computing a first angle of incidence from the radar device to the first monitoring point according to the mounting parameters of the radar device includes:
computing a first slope distance between the radar device and the first monitoring point according to the mounting height of the radar device and the first horizontal distance; and
computing the first angle of incidence according to the mounting height of the radar device and the first slope distance,
an equation for computing the first slope distance being:

$$r_1 = \sqrt{h^2 + l_1^2}$$

$r_1$ being the first slope distance, h being the mounting height of the radar device, and $l_1$ being the first horizontal distance; and
an equation for computing the first angle of incidence being:

$$\theta_1 = arccos\left(\frac{h}{r_1}\right)$$

$\theta_1$ being the first angle of incidence, h being the mounting height of the radar device, and $r_1$ being the first slope distance.

Preferably, the computing a second angle of incidence from the radar device to the second monitoring point according to the mounting parameters of the radar device includes:

computing a second slope distance between the radar device and the second monitoring point according to the mounting height of the radar device and the second horizontal distance; and
computing the second angle of incidence according to the mounting height of the radar device and the second slope distance,
an equation for computing the second slope distance being:

$$r_2 = \sqrt{h^2 + l_2^2}$$

$r_2$ being the second slope distance, h being the mounting height of the radar device, and h being the second horizontal distance; and
an equation for computing the second angle of incidence being:

$$\theta_2 = arccos\left(\frac{h}{r_2}\right)$$

$\theta_2$ being the second angle of incidence, h being the mounting height of the radar device, and $r_2$ being the second slope distance.

Preferably, equations/an equation for computing the vertical displacement and/or the horizontal displacement of the monitoring target according to the first angle of incidence, the second angle of incidence, the first line-of-sight deformation and the second line-of-sight deformation are/is as follows:

$$\begin{cases} \Delta r_1 = z * cos\theta_1 - x * sin\theta_1 \\ \Delta r_2 = z * cos\theta_2 - x * sin\theta_2 \end{cases}$$

$\Delta r_1$ being the first line-of-sight deformation, $\Delta r_2$ being the second line-of-sight deformation, $\theta_1$ being the first angle of incidence, $\theta_2$ being the second angle of incidence, z being the vertical displacement, and x being the horizontal displacement.
Preferably, the method further includes:

obtaining a first deformation threshold and/or a second deformation threshold;
comparing the vertical displacement with the first deformation threshold, and/or comparing the horizontal displacement with the second deformation threshold; and
sending out a deformation over-threshold alarm signal in response to the vertical displacement being higher than the first deformation threshold and/or the horizontal displacement being higher than the second deformation threshold.

Preferably, the method further includes:

detecting a working state of the radar device; and
sending out an abnormal working state alarm signal in response to an abnormal working state of the radar device.

In a second aspect, an embodiment of the present disclosure provides a method for measuring deformation. The method includes:

obtaining an echo signal of a monitoring point of a monitoring target;
obtaining a line-of-sight deformation of the monitoring target according to the echo signal; and
computing a vertical displacement and/or a horizontal displacement of the monitoring target according to mounting parameters of a radar device and the line-of-sight deformation,
where the line-of-sight deformation is a displacement of the monitoring target in a direction of a connecting line between the radar device and the monitoring point.

Preferably, the mounting parameters of the radar device include a mounting height of the radar device and a slope distance between the radar device and the monitoring point; and
an equation for computing the vertical displacement of the monitoring target according to the mounting parameters of the radar device and the line-of-sight deformation is:

$$z = \sqrt{(r + \Delta r)^2 - (r^2 - h^2)} - h$$

$\Delta r$ being the line-of-sight deformation, r being the slope distance, z being the vertical displacement, and h being the mounting height of the radar device.

Preferably, the mounting parameters of the radar device include a mounting height of the radar device and a slope distance between the radar device and the monitoring point; and

an equation for computing the horizontal displacement of the monitoring target according to the mounting parameters of the radar device and the line-of-sight deformation is:

$$x = \sqrt{(r + \Delta r)^2 - h^2} - \sqrt{r^2 - h^2}$$

$\Delta r$ being the line-of-sight deformation, r being the slope distance, x being the horizontal displacement, and h being the mounting height of the radar device.

In a third aspect, an embodiment of the present disclosure provides a radar system. The system includes a radar device and a server, where the radar device includes:

a radio frequency signal source unit configured to generate a linear frequency modulation signal, the linear frequency modulation signal being an X-band signal or a K-band signal;
a signal transmission unit configured to transmit the linear frequency modulation signal;
a signal reception unit configured to receive a first echo signal of a first monitoring point and a second echo signal of a second monitoring point of a monitoring target; and
a communication unit configured to transmit the first echo signal and the second echo signal to the server; and
the server is configured to obtain a first line-of-sight deformation of the monitoring target according to the first echo signal, obtain a second line-of-sight deformation of the monitoring target according to the second echo signal, and compute a vertical displacement and/or a horizontal displacement of the monitoring target according to mounting parameters of the radar device, the first line-of-sight deformation and the second line-of-sight deformation,
the first line-of-sight deformation being a displacement of the first monitoring point in a direction of a connecting line between the radar device and the first monitoring point, and the second line-of-sight deformation being a displacement of the second monitoring point in a direction of a connecting line between the radar device and the second monitoring point.

In a fourth aspect, an embodiment of the present disclosure provides a radar system. The system includes a radar device and a server, where the radar device includes:

a radio frequency signal source unit configured to generate a linear frequency modulation signal, the linear frequency modulation signal being an X-band signal or a K-band signal;
a signal transmission unit configured to transmit the linear frequency modulation signal;
a signal reception unit configured to receive an echo signal of a monitoring point of a monitoring target; and
a communication unit configured to transmit the echo signal to the server; and
the server is configured to obtain a line-of-sight deformation of the monitoring target according to the echo signal, and compute a vertical displacement and/or a horizontal displacement of the monitoring target according to mounting parameters of the radar device and a line-of-sight deformation,
the line-of-sight deformation being a displacement of the monitoring target in a direction of a connecting line between the radar device and the monitoring point.

According to the technical solution provided in the embodiments of the present disclosure, the first echo signal of the first monitoring point and the second echo signal of the second monitoring point of the monitoring target are obtained, and the first line-of-sight deformation and the second line-of-sight deformation of the monitoring target are obtained according to the first echo signal and the second echo signal, and the vertical displacement and/or the horizontal displacement of the monitoring target are/is obtained according to the mounting parameters of the radar device, the first line-of-sight deformation and the second line-of-sight deformation. Thus, environment adaptability and measurement precision of the radar system may be improved, and the radar device is convenient to mount.

BRIEF DESCRIPTION OF THE SEVERAL VIEWS OF THE DRAWINGS

With reference to the description of the accompanying drawings below on embodiments of the present disclosure, what is described above and other objectives, features and advantages of the present disclosure will become more apparent. In the figures:

Fig. 1 is a structural schematic diagram of a radar system of an embodiment of the present disclosure;

Fig. 2 is a structural schematic diagram of a radar device of an embodiment of the present disclosure;

Fig. 3 is a flow chart of a method for measuring a deformation of a first embodiment of the present disclosure;

Fig. 4 is an echo signal oscillogram of an embodiment of the present disclosure;

Fig. 5 is an antenna transceiving pattern of an embodiment of the present disclosure;

Fig. 6 is a parametric schematic diagram of a radar device of an embodiment of the present disclosure;

Fig. 7 is a flow chart of computing a displacement of an embodiment of the present disclosure;

Fig. 8 is a flow chart of a method for measuring a deformation of a second embodiment of the present disclosure;

Fig. 9 is a parametric schematic diagram of a radar device of an embodiment of the present disclosure;

Fig. 10 is a parametric schematic diagram of a radar device of an embodiment of the present disclosure; and

Fig. 11 is a structural schematic diagram of an electronic device of an embodiment of the present disclosure.

DETAILED DESCRIPTION OF THE INVENTION

The present disclosure will be described below on the basis of embodiments, but the present disclosure is not limited only to these embodiments. In the detailed description of the present disclosure below, some specific details are described in detail. The present disclosure will be fully understood by those skilled in the art without description of these details. Well-known methods, processes, flows, elements, and circuits have not been described in detail in order to avoid confusion about the essence of the present disclosure.

In addition, it should be understood by those of ordinary skill in the art that the accompanying drawings provided herein are for illustrative purposes and are not necessarily drawn to scale.

Moreover, it should be understood that in the following description, "circuit" refers to a conductive loop composed of at least one element or sub-circuit by means of an electrical connection or an electromagnetic connection. When an element or circuit is referred to as being "connected" to another element or the element or circuit is referred to as being "connected" between two nodes, it may be directly coupled or connected to the other element or intervening elements may be present, and a connection between elements may be a physical connection, a logical connection, or a connection of a combination thereof. On the contrary, when the element is referred to as being "directly coupled" or "directly connected" to another element, it means that there are no intervening elements therebetween.

Unless the context clearly requires otherwise, "comprise," "include", etc. in the description should be interpreted as inclusive meanings rather than exclusive or exhaustive meanings, and in other words, means "including but not limited to".

In the description of the present disclosure, it is to be understood that the terms "first", "second", etc. are merely for descriptions and may not be understood as indication or implication of relative importance. In addition, in the description of the present disclosure, "plurality of" means two or more, unless otherwise specified.

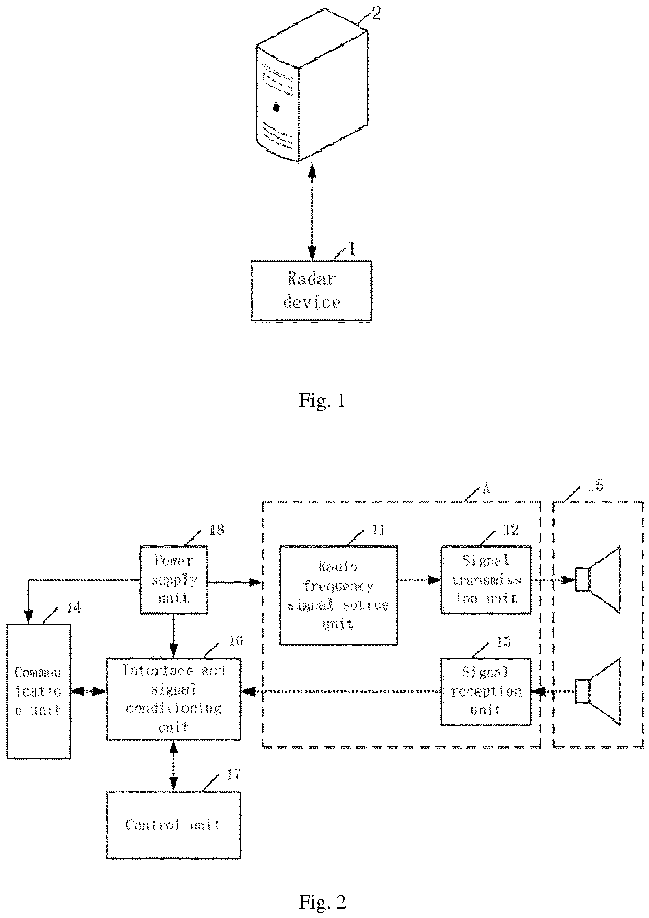

Fig. 1 is a structural schematic diagram of a radar system of an embodiment of the present disclosure. As shown in Fig. 1, the radar system of the embodiment of the present disclosure includes a radar device 1 and a server 2. The radar device 1 is configured to transmit a linear frequency modulation (LFM) signal and to receive an echo signal of a monitoring point of a monitoring target. The server 2 is configured to determine a deformation of the monitoring target according to the echo signal.

In this embodiment, the radar system determines the deformation of the monitoring target by means of at least one monitoring point on the monitoring target.

In this embodiment, the radar system may be used for maintenance and supervision of bridge engineering, dam engineering, rail transit engineering, highways, buildings, etc., moreover, may monitor a slope of an urban residential area, perform early warning on landslide, debris flow, etc, and may further achieve earthquake networking monitoring and imminent earthquake early warning.

In this embodiment, the radar system has all-day (supporting real-time monitoring and various communication data transmission) and all-weather (supporting working under severe meteorological conditions of rain, snow, fog, haze, sand storm, etc.) and non-contact tiny deformation monitoring, and moreover, may measure and display microwave deformation displacements of points, lines and surfaces in real time.

In this embodiment, the farthest distance between the radar device and the monitoring target may reach 1 kilometer, such that mounting and use are facilitated.

Further, a structure of the radar device 1 may refer to Fig. 2, including a radio frequency front end portion A and a communication unit 14. The radio frequency front end portion A includes a radio frequency signal source unit 11, a signal transmission unit 12 and a signal reception unit 13. The radio frequency signal source unit 11 is configured to generate the LFM signal. The signal transmission unit 12 is configured to transmit the LFM signal. The signal reception unit 13 is configured to receive an echo signal of a monitoring point of a monitoring target. The communication unit 14 is configured to transmit the echo signal to the server 2.

In this embodiment, the radio frequency signal source unit is configured to generate the LFM signal. Since a spectral bandwidth of the LFM signal falls within an audible range, and the LFM signal hears like a bird sound, and is also referred to as a bird sound signal. In a radar technology, the LFM signal may be used to increase a radio frequency pulse width, increase a communication distance, improve average transmission power, and maintain an enough signal spectrum width without reducing range resolution of a radar.

Preferably, the LFM signal is an X-band signal or a K-band signal. Specifically, the signal may be divided into an L band, an S band, a C band, an X band, a Ku band, a K band, a Ka band, etc. according to bands. The X-band has a frequency range of 8 GHz to 12 GHz, and the K band has a frequency range of 18 GHz to 27 GHz.

Preferably, when the LFM signal is an X-band signal, the frequency is selected to be 10 GHz, and when the LFM signal is a K-band signal, the frequency is selected to be 24 GHz.

In this embodiment, the radar device 1 further includes an antenna 15 connected to the signal transmission unit 12 and the signal reception unit 13. The signal transmission unit 12 is configured to transmit the LFM signal by means of the antenna 15. The signal reception unit 13 is configured to receive the echo signal by means of the antenna 15.

Preferably, when the LFM signal is the X-band signal, the antenna 15 may use a horn antenna, and when the LFM signal is the K-band signal, the antenna 15 may use a microstrip antenna, to complete signal transceiving.

In this embodiment, the communication unit 14 is configured to communicate with the server 2, to transmit the echo signal to the server 2 or to receive a control signal from the server 2.

Further, the communication unit may perform communication in various existing wired communication or wireless communication modes.

In this embodiment, the radar device 1 further includes an interface and signal conditioning unit 16 for providing the interface front end portion A with an interface for information interaction with other modules and completing operations such as timing control of the signal.

In this embodiment, the radar device 1 further includes a control unit 17 for processing the signal in real time. For example, the control unit filters the echo signal, and analyzes the received control signal.

In this embodiment, the radar device 1 further includes a power supply unit 18 for supplying power to other units in the radar device 1.

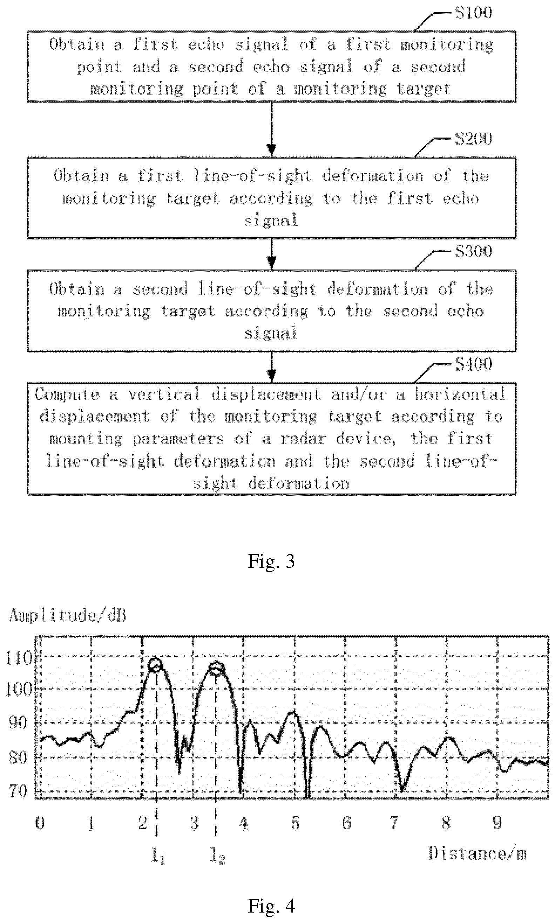

Fig. 3 is a flow chart of a method for measuring a deformation of a first embodiment of the present disclosure. In this embodiment, the server 2 measures a deformation by means of two monitoring points of a monitoring target. Specifically, the server 2 includes:
S100, obtain a first echo signal of a first monitoring point and a second echo signal of a second monitoring point of a monitoring target.

In this embodiment, according to an actual measurement environment, the radar device 1 is mounted at a suitable position, such that the signal transmitted by the radar device may cover two monitoring points of the monitoring target. Echo signals of the two monitoring points are obtained by means of radio frequency signals transmitted by the radar device, and the echo signals are transmitted to the server.

Further, two reflectors may be mounted on the monitoring target as two monitoring points, or two protrusions on the monitoring target may be selected as two monitoring points.

Specifically, Fig. 4 is an echo signal oscillogram of an embodiment of the present disclosure. As shown in Fig. 4, an abscissa is a distance from a radar, and an ordinate is intensity of an echo signal. It may be seen from Fig. 4 that two points having the strongest signal strength are two points having distances $l_1$ and $l_2$ respectively.

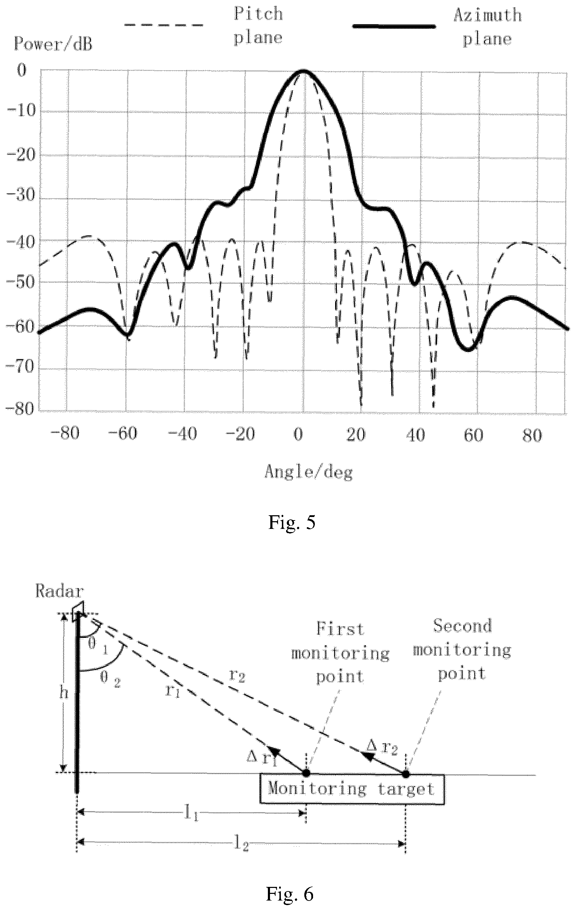

Further, Fig. 5 is an antenna transceiving pattern of an embodiment of the present disclosure. As shown in Fig. 5, an ordinate represents power in dB and an abscissa represents an angle in deg. Specifically, a solid line is a transceiving pattern of an azimuth plane, and a dotted line is a transceiving pattern of a pitch plane. It may be seen from the figure that a pitch 3dB beamwidth is about 10 degrees and an azimuth 3dB beamwidth is about 20 degrees. Therefore, a mounting direction of the antenna may be determined according to the antenna transceiving pattern.

Further, the first monitoring point and the second monitoring point of the monitoring target are as shown in Fig. 6.

S200, obtain a first line-of-sight deformation of the monitoring target according to the first echo signal.

In this embodiment, the server 2 obtains a first line-of-sight deformation of the monitoring target by means of differential interferometry.

Specifically, the radar device 1 continuously transmits radio frequency signals, and at the first monitoring point, phases of first echo signals received by the radar device for two successive times are $\varphi_{11}$ and $\varphi_{12}$ respectively, such that a deformation occurring between two signal transmission time intervals of the first monitoring point is a first line-of-sight deformation $\Delta r_1$.

$$\Delta r_1 = \frac{\lambda}{4\pi} \left( \varphi_{11} - \varphi_{12} \right)$$

$\lambda$ is a wavelength of the radio frequency signal, and $\Delta r_1$ is the second line.

S300, obtain a second line-of-sight deformation of the monitoring target according to the second echo signal.

In this embodiment, the server 2 obtains the second line-of-sight deformation of the monitoring target by means of differential interferometry.

Specifically, the radar device 1 continuously transmits radio frequency signals, and at the second monitoring point, phases of second echo signals received by the radar device for two successive times are $\varphi_{21}$ and $\varphi_{22}$ respectively, such that a deformation occurring between two signal transmission time intervals of the second monitoring point is a second line-of-sight deformation $\Delta r_2$.

$$\Delta r_2 = \frac{\lambda}{4\pi}\left(\varphi_{21} - \varphi_{22}\right)$$

$\lambda$ is a wavelength of the radio frequency signal, and $\Delta r_1$ is the second line-of-sight deformation.

S400, compute a vertical displacement and/or a horizontal displacement of the monitoring target according to mounting parameters of a radar device, the first line-of-sight deformation and the second line-of-sight deformation.

In this embodiment, the mounting parameters of the radar device include a mounting height h of the radar device, a first horizontal distance lifrom the radar device to the first monitoring point, and a second horizontal distance h from the radar device to the second monitoring point.

Specifically, the mounting height h of the radar device is a vertical distance between the radar device and a connecting line between the first monitoring point and the second monitoring point. The first horizontal distance $l_1$ is a distance between a mapping point from the radar device to the connecting line between the first monitoring point and the second monitoring point and the first monitoring point. The second horizontal distance h is a distance between a mapping point from the radar device to the connecting line between the first monitoring point and the second monitoring point and the second monitoring point.

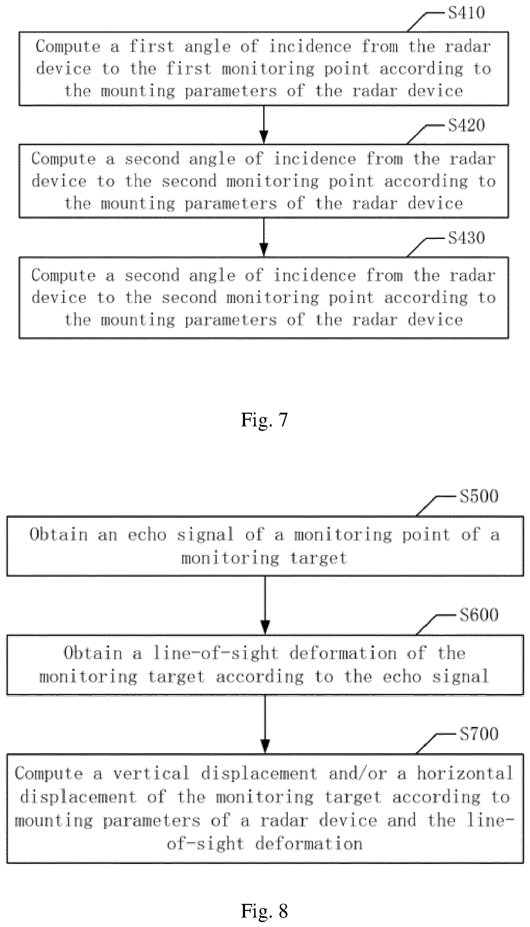

Further, the step of computing, by the server 2, a vertical displacement and/or a horizontal displacement of the monitoring target according to mounting parameters of the radar device, the first line-of-sight deformation and the second line-of-sight deformation, as shown in Fig. 7, includes:

S410, compute a first angle of incidence from the radar device to the first monitoring point according to the mounting parameters of the radar device.

In this embodiment, the first angle of incidence $\theta_1$ is an included angle between the connecting line between the radar device and the first monitoring point and a vertical direction, which may specifically refer to Fig. 6.

Further, the step of computing a first angle of incidence from the radar device to the first monitoring point according to the mounting parameters of the radar device includes:

S411, compute a first slope distance between the radar device and the first monitoring point according to the mounting height of the radar device and the first horizontal distance.

An equation for computing the first slope distance is:

$$r_1 = \sqrt{h^2 + {l_1}^2}$$

where $r_1$ is the first slope distance, h is the mounting height of the radar device, and $l_1$ is the first horizontal distance.

S412, compute the first angle of incidence according to the mounting height of the radar device and the first slope distance.

An equation for computing the first angle of incidence is:

$$\theta_1 = arccos\left(\frac{h}{r_1}\right)$$

where $\theta_1$ is the first angle of incidence, h is the mounting height of the radar device, and $r_1$ is the first slope distance.

S420, compute a second angle of incidence from the radar device to the second monitoring point according to the mounting parameters of the radar device.

In this embodiment, the second angle of incidence $\theta_2$ is an included angle between the connecting line between the radar device and the second monitoring point and a vertical direction, which may specifically refer to Fig. 6.

Further, the step of computing a second angle of incidence from the radar device to the second monitoring point according to the mounting parameters of the radar device includes:

S421, compute a second slope distance between the radar device and the second monitoring point according to the mounting height of the radar device and the second horizontal distance.

An equation for computing the second slope distance is:

$$r_2 = \sqrt{h^2 + {l_2}^2}$$

where $r_2$ is the second slope distance, h is the mounting height of the radar device, and h is the second horizontal distance.

S422, compute the second angle of incidence according to the mounting height of the radar device and the second slope distance.

An equation for computing the second angle of incidence is:

$$\theta_2 = arccos \ (\frac{h}{r_2})$$

where $\theta_2$ is the second angle of incidence, h is the mounting height of the radar device, and $r_2$ is the second slope distance.

S430, compute the vertical displacement and/or the horizontal displacement of the monitoring target according to the first angle of incidence, the second angle of incidence, the first line-of-sight deformation and the second line-of-sight deformation.

In this embodiment, the server computes the vertical displacement and/or the horizontal displacement of the monitoring target according to the first angle of incidence, the second angle of incidence, the first line-of-sight deformation and the second line-of-sight deformation, and may specifically obtain the vertical displacement and/or the horizontal displacement by means of an equation set, and the equation set is as follows:

$$\begin{cases} \Delta r_1 = z * cos\theta_1 - x * sin\theta_1 \\ \Delta r_2 = z * cos\theta_2 - x * sin\theta_2 \end{cases}$$

where $\Delta r_1$ is the first line-of-sight deformation, $\Delta r_2$ is the second line-of-sight deformation, $\theta_1$ is the first angle of incidence, $\theta_2$ is the second angle of incidence, z is the vertical displacement, and x is the horizontal displacement.

Thus, the vertical displacement and the horizontal displacement may be obtained by solving the equation set.

According to the embodiment of the present disclosure, the first echo signal of the first monitoring point and the second echo signal of the second monitoring point of the monitoring target are obtained, the first line-of-sight deformation and the second line-of-sight deformation of the monitoring target are obtained according to the first echo signal and the second echo signal, and the vertical displacement and/or the horizontal displacement of the monitoring target are/is obtained according to the mounting parameters of the radar device, the first line-of-sight deformation and the second line-of-sight deformation. Thus, environment adaptability and measurement precision of the radar system may be improved, and the radar device is convenient to mount.

Fig. 8 is a flow chart of a method for measuring a deformation of a second embodiment of the present disclosure. In this embodiment, the server 2 measures a deformation by means of one monitoring point of a monitoring target. Specifically, the server 2 includes:

S500, obtain an echo signal of a monitoring point of a monitoring target.

In this embodiment, the echo signal of the monitoring point is obtained by means of a radio frequency signal transmitted by a radar device, and the echo signal is transmitted to the server.

In this embodiment, a reflector may be mounted on the monitoring target as the monitoring point, or a protrusion on the monitoring target may be selected as the monitoring point.

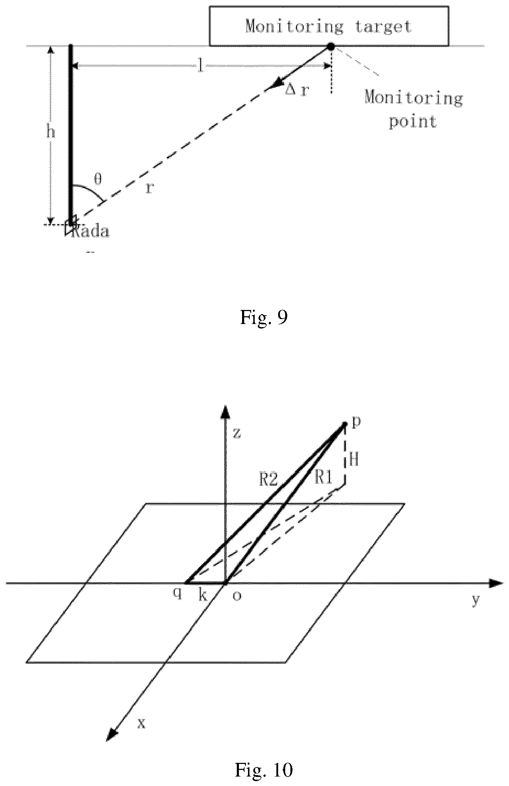

Further, the monitoring target and the monitoring point are as shown in Fig. 9.

S600, obtain a line-of-sight deformation of the monitoring target according to the echo signal.

In this embodiment, the server 2 obtains a first line-of-sight deformation of the monitoring target by means of differential interferometry.

Specifically, the radar device 1 continuously transmits radio frequency signals, and at the monitoring point, phases of echo signals received by the radar device for two successive times are $\varphi_{31}$ and $\varphi_{32}$ respectively, such that a deformation occurring between two signal transmission time intervals of the monitoring point is a line-of-sight deformation $\Delta r$.

$$\Delta r = \frac{\lambda}{4\pi} \ (\varphi_{31} - \varphi_{32})$$

$\lambda$ is a wavelength of the radio frequency signal, and $\Delta r$ is the first line-of-sight deformation.

S700, compute a vertical displacement and/or a horizontal displacement of the monitoring target according to mounting parameters of a radar device and the line-of-sight deformation.

In an optional implementation, the mounting parameters of the radar device include a mounting height h of the radar device and a slope distance r between the radar device and the monitoring point.

Specifically, the mounting height h of the radar device is a vertical distance from the radar device to a plane, in which the monitoring point is located, of the monitoring target. The slope distance r is a distance of a connecting line between the radar device and the monitoring point.

An equation for computing the vertical displacement of the monitoring target according to the mounting parameters of the radar device and the line-of-sight deformation is:

$$z = \sqrt{(r + \Delta r)^2 - (r^2 - h^2)} - h$$

where $\Delta r$ is the line-of-sight deformation, r is the slope distance, z is the vertical displacement, and h is the mounting height of the radar device.

An equation for computing the horizontal displacement of the monitoring target according to the mounting parameters of the radar device and the line-of-sight deformation is:

$$x = \sqrt{(r + \Delta r)^2 - h^2} - \sqrt{r^2 - h^2}$$

where $\Delta r$ is the line-of-sight deformation, r is the slope distance, x is the horizontal displacement, and h is the mounting height of the radar device.

In another optional implementation, the mounting parameters of the radar device include a mounting height h of the radar device and a slope distance between the radar device and the monitoring point.

Specifically, the mounting height h of the radar device is a vertical distance from the radar device to a plane, in which the monitoring point is located, of the monitoring target. The horizontal distance 1 is a distance between a mapping point from the radar device to a plane, in which the monitoring point is located, of the monitoring target and the monitoring point.

The slope distance between the radar device and the monitoring point is computed according to the mounting height of the radar device and the horizontal distance.

An equation for computing the slope distance is:

$$r = \sqrt{h^2 + l^2}$$

where r is the slope distance, h is the mounting height of the radar device, and l is the horizontal distance.

An equation for computing the vertical displacement of the monitoring target according to the mounting parameters of the radar device and the line-of-sight deformation is:

$$z = \sqrt{(r + \Delta r)^2 - (r^2 - h^1)} - h$$

where $\Delta r$ is the line-of-sight deformation, r is the slope distance, z is the vertical displacement, and h is the mounting height of the radar device.

An equation for computing the horizontal displacement of the monitoring target according to the mounting parameters of the radar device and the line-of-sight deformation is:

$$x = \sqrt{(r + \Delta r)^2 - h^2} - \sqrt{r^2 - h^2}$$

where $\Delta r$ is the line-of-sight deformation, r is the slope distance, x is the horizontal displacement, and h is the mounting height of the radar device.

It should be understood that the method for computing the vertical displacement and/or the horizontal displacement of the monitoring target of the embodiment of the present disclosure is not limited to the method provided above, but may be also obtained through other methods. For example:
an angle of incidence is computed according to the mounting height of the radar device and the slope distance.

An equation for computing the angle of incidence is:

$$\theta - arccos \left( \frac{h}{r} \right)$$

where $\theta$ is the second angle of incidence, h is the mounting height of the radar device, and r is the slope distance.

The vertical displacement and/or the horizontal displacement of the monitoring target are/is computed according to the angle of incidence and the line-of-sight deformation.

Specifically, equations/an equation for computing the vertical displacement and/or the horizontal displacement of the monitoring target according to the mounting parameters of the radar device and the line-of-sight deformation are/is:

$$\begin{cases} z = \dfrac{\Delta r}{sin\theta} \\ x = \dfrac{\Delta r}{cos\theta} \end{cases}$$

where $\Delta r$ is the line-of-sight deformation, $\theta$ is the angle of incidence, z is the vertical displacement, and x is the horizontal displacement.

Thus, the vertical displacement and/or the horizontal displacement of the monitoring target may be obtained.

Further, it may occur that the monitoring target is displaced in a certain direction, but the line-of-sight deformation measured by the radar device is zero, and thus an embodiment of the present disclosure further provides a method, so as to obtain a displacement of a monitoring target in an actual direction. As shown in Fig. 10, specifically, a point p is a mounting position of a radar device, a point o is an original position of a monitoring target, and a point q is a position of the monitoring target after displacement. A distance $R_1$ between the radar device and the point o and a distance $R_2$ between the radar device and the point q may be obtained by analyzing an echo signal of the radar device, it is assumed that a displacement of the monitoring target in an actual direction is k (that is, a distance between the point o and the point q is k), and ∠poq=β. Thus, a triangle consisting of the point o, the point p, and the point q may be obtained:

$$R_2{}^2 = k^2 + R_1{}^2 - 2kR_1 cos\beta$$

where $R_1$ is a distance between the radar device and the original position of the monitoring point, $R_2$ is a distance between the radar device and a position of the monitoring point after displacement, k is a displacement of the monitoring point, and β is an included angle between a displacement direction of the monitoring point and a direction of a connecting line between the radar device and the original position of the monitoring point.

Further, R1 and R2 described above may be obtained by means of measurement. Thus, a relation between k and β may be obtained by means of the above equation.

In an optional implementation, the included angle β may be obtained according to an actual deformation condition of the monitoring target in an actual application scene, such that k may be obtained by means of computation according to the above equation, to obtain a displacement of the monitoring target in the actual direction.

In another optional implementation, a relation of included angles β corresponding to different types of monitoring targets may be obtained in advance. For example, the included angle corresponding to a rail is β1, the included angle corresponding to a bridge is β2, the included angle corresponding to a building is β3, and the included angle corresponding to a highway is β4, etc. Thus, the corresponding included angle is obtained according to the type of the monitoring target in the actual application scene, such that k may be obtained by means of computation according to the above equation, to obtain the displacement of the monitoring target in the actual direction.

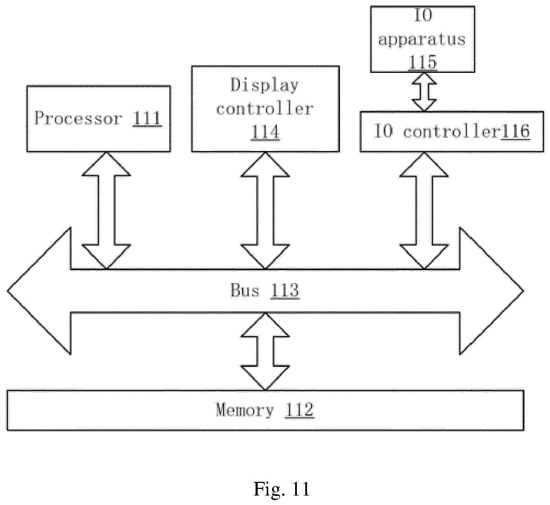

Fig. 11 is a schematic diagram of an electronic device of an embodiment of the present disclosure. The electronic device shown in Fig. 11 is a general-purpose server, which includes a general-purpose computer hardware structure, which at least includes a processor 111 and a memory 112. The processor 111 is connected to the memory 112 by means of a bus 113. The memory 112 is suitable for storing instructions or programs executable by the processor 111. The processor 111 may be a stand-alone microprocessor or may be a set of one or more microprocessors. Thus, the processor 111 executes the method flow of the embodiment of the present disclosure as described above by executing the instructions stored in the memory 112, so as to process data and control other apparatuses. The bus 113 connects the plurality of assemblies described above together, and moreover, connects the above assemblies to a display controller 114 and a display apparatus and an input/output (I/O) apparatus 115. The I/O apparatus 115 may be a mouse, a keyboard, a modem, a network interface, a touch input apparatus, a somatosensory input apparatus, a printer, and other apparatuses well known in the art. Typically, the input/output apparatus 115 is connected to a system by means of an input/output (I/O) controller 116.

Those skilled in the art should understand that the embodiments of the present disclosure may be provided as a method, a device (apparatus), or a computer program product. Therefore, the present disclosure may take the form of hardware-only embodiments, software-only embodiments, or software and hardware combined embodiments. Moreover, the present disclosure may take a computer program product that is implemented on one or more computer-readable storage media (including but not limited to a disk memory, a compact disc read-only memory (CD-ROM), an optical memory, etc.) that include computer-usable program codes.

The present disclosure is described with reference to flowcharts of methods, apparatuses (devices), and computer program products according to the embodiments of the present disclosure. It should be understood that each flow in the flow charts may be implemented by computer program instructions.

These computer program instructions may be stored in a computer readable memory that may instruct the computer or another programmable data processing device to work in a specific manner, such that the instructions stored in the computer readable memory generate an artifact that includes an instruction apparatus. The instruction apparatus implements a specific function in one or more processes in the flowcharts.

These computer program instructions may be provided for a general-purpose computer, a special-purpose computer, an embedded processor, or a processor of another programmable data processing device to generate a machine, such that the instructions executed by a computer or a processor of another programmable data processing device generate an apparatus for implementing a specific function in one or more processes in the flowcharts.

What is described above is merely the preferred embodiments of the present disclosure and is not intended to limit the present disclosure, and various modifications and changes may be made by those skilled in the art. Any modifications, equivalent replacements, improvements, etc. made within the spirit and principles of the present disclosure should fall within the scope of protection of the present disclosure.

**Claims**

1.  A method for measuring a deformation, comprising:

    obtaining a first echo signal of a first monitoring point and a second echo signal of a second monitoring point of a monitoring target;
    obtaining a first line-of-sight deformation of the monitoring target according to the first echo signal;

obtaining a second line-of-sight deformation of the monitoring target according to the second echo signal; and

computing a vertical displacement and/or a horizontal displacement of the monitoring target according to mounting parameters of a radar device, the first line-of-sight deformation and the second line-of-sight deformation,

wherein the first line-of-sight deformation is a displacement of the monitoring target in a direction of a connecting line between the radar device and the first monitoring point, and the second line-of-sight deformation is a displacement of the monitoring target in a direction of a connecting line between the radar device and the second monitoring point.

2. The method according to claim 1, wherein the computing a vertical displacement and/or a horizontal displacement of the monitoring target according to mounting parameters of a radar device, the first line-of-sight deformation and the second line-of-sight deformation comprises:

computing a first angle of incidence from the radar device to the first monitoring point according to the mounting parameters of the radar device, the first angle of incidence being an included angle between the connecting line between the radar device and the first monitoring point and a vertical direction;

computing a second angle of incidence from the radar device to the second monitoring point according to the mounting parameters of the radar device, the second angle of incidence being an included angle between the connecting line between the radar device and the second monitoring point and a vertical direction; and

computing the vertical displacement and/or the horizontal displacement of the monitoring target according to the first angle of incidence, the second angle of incidence, the first line-of-sight deformation and the second line-of-sight deformation.

3. The method according to claim 2, wherein the mounting parameters of the radar device comprise a mounting height of the radar device, a first horizontal distance from the radar device to the first monitoring point, and a second horizontal distance from the radar device to the second monitoring point; and

the computing a first angle of incidence from the radar device to the first monitoring point according to the mounting parameters of the radar device comprises:

computing a first slope distance between the radar device and the first monitoring point according to the mounting height of the radar device and the first horizontal distance; and

computing the first angle of incidence according to the mounting height of the radar device and the first slope distance,

an equation for computing the first slope distance being:

$$r_1 = \sqrt{h^2 + l_1{}^2}$$

$r_1$ being the first slope distance, h being the mounting height of the radar device, and $l_1$ being the first horizontal distance; and

an equation for computing the first angle of incidence being:

$$\theta_1 = arccos \left( \frac{h}{r_1} \right)$$

$\theta_1$ being the first angle of incidence, h being the mounting height of the radar device, and $r_1$ being the first slope distance.

4. The method according to claim 3, wherein the computing a second angle of incidence from the radar device to the second monitoring point according to the mounting parameters of the radar device comprises:

computing a second slope distance between the radar device and the second monitoring point according to the mounting height of the radar device and the second horizontal distance; and

computing the second angle of incidence according to the mounting height of the radar device and the second slope distance,

an equation for computing the second slope distance being:

$$r_2 = \sqrt{h^2 + l_2{}^2}$$

$r_2$ being the second slope distance, h being the mounting height of the radar device, and h being the second horizontal distance; and

an equation for computing the second angle of incidence being:

$$\theta_2 = arccos \left( \frac{h}{r_2} \right)$$

$\theta_2$ being the second angle of incidence, h being the mounting height of the radar device, and $r_2$ being the second slope distance.

5. The method according to claim 4, wherein equations/an equation for computing the vertical displacement and/or the horizontal displacement of the monitoring target according to the first angle of incidence, the second angle of incidence, the first line-of-sight deformation and the second line-of-sight deformation are/is as follows:

$$\begin{cases} \Delta r_1 = z * cos\theta_1 - x * sin\theta_1 \\ \Delta r_2 = z * cos\theta_2 - x * sin\theta_2 \end{cases}$$

$\Delta r_1$ being the first line-of-sight deformation, $\Delta r_2$ being the second line-of-sight deformation, $\theta_1$ being the first angle of incidence, $\theta_2$ being the second angle of incidence, z being the vertical displacement, and x being the horizontal displacement.

6. The method according to claim 1, further comprising:

obtaining a first deformation threshold and/or a second deformation threshold;
comparing the vertical displacement with the first deformation threshold, and/or comparing the horizontal displacement with the second deformation threshold; and
sending out a deformation over-threshold alarm signal in response to the vertical displacement being higher than the first deformation threshold and/or the horizontal displacement being higher than the second deformation threshold.

7. The method according to claim 1, further comprising:

detecting a working state of the radar device; and
sending out an abnormal working state alarm signal in response to an abnormal working state of the radar device.

8. A method for measuring a deformation, comprising:

obtaining an echo signal of a monitoring point of a monitoring target;
obtaining a line-of-sight deformation of the monitoring target according to the echo signal; and
computing a vertical displacement and/or a horizontal displacement of the monitoring target according to mounting parameters of a radar device and the line-of-sight deformation,
wherein the line-of-sight deformation is a displacement of the monitoring target in a direction of a connecting line between the radar device and the monitoring point.

9. The method according to claim 8, wherein the mounting parameters of the radar device comprise a mounting height of the radar device and a slope distance between the radar device and the monitoring point; and

an equation for computing the vertical displacement of the monitoring target according to the mounting parameters of the radar device and the line-of-sight deformation is:

$$z = \sqrt{(r + \Delta r)^2 - (r^2 - h^2)} - h$$

$\Delta r$ being the line-of-sight deformation, r being the slope distance, z being the vertical displacement, and h being the mounting height of the radar device.

10. The method according to claim 8, wherein the mounting parameters of the radar device comprise a mounting height of the radar device and a slope distance between the radar device and the monitoring point; and

an equation for computing the horizontal displacement of the monitoring target according to the mounting parameters of the radar device and the line-of-sight deformation is:

$$x = \sqrt{(r + \Delta r)^2 - h^2} - \sqrt{r^2 - h^2}$$

$\Delta r$ being the line-of-sight deformation, r being the slope distance, x being the horizontal displacement, and h being the mounting height of the radar device.

11. A radar system, comprising a radar device and a server,
wherein the radar device comprises:

a radio frequency signal source unit configured to generate a linear frequency modulation signal, the linear frequency modulation signal being an X-band signal or a K-band signal;
a signal transmission unit configured to transmit the linear frequency modulation signal;
a signal reception unit configured to receive a first echo signal of a first monitoring point and a second echo signal of a second monitoring point of a monitoring target; and
a communication unit configured to transmit the first echo signal and the second echo signal to the server; and
the server is configured to obtain a first line-of-sight deformation of the monitoring target according to the first echo signal, obtain a second line-of-sight deformation of the monitoring target according to the second echo signal, and compute a vertical displacement and/or a horizontal displacement of the monitoring target according to mounting parameters of the radar device, the first line-of-sight deformation and the second line-of-sight deformation,

the first line-of-sight deformation being a displacement of the first monitoring point in a direction of a connecting line between the radar device and the first monitoring point, and the second line-of-sight deformation being a displacement of the second monitoring point in a direction of a connecting line between the radar device and the second monitoring point.

12. A radar system, comprising a radar device and a server,
wherein the radar device comprises:

a radio frequency signal source unit configured to generate a linear frequency modulation signal, the linear frequency modulation signal being an X-band signal or a K-band signal;
a signal transmission unit configured to transmit the linear frequency modulation signal;
a signal reception unit configured to receive an echo signal of a monitoring point of a monitoring target; and
a communication unit configured to transmit the echo signal to the server; and
the server is configured to obtain a line-of-sight deformation of the monitoring target according to the echo signal, and compute a vertical displacement and/or a horizontal displacement of the monitoring target according to mounting parameters of the radar device and a line-of-sight deformation,
the line-of-sight deformation being a displacement of the monitoring target in a direction of a connecting line between the radar device and the monitoring point.

Fig. 1

Fig. 2

S100

Obtain a first echo signal of a first monitoring point and a second echo signal of a second monitoring point of a monitoring target

S200

Obtain a first line-of-sight deformation of the monitoring target according to the first echo signal

S300

Obtain a second line-of-sight deformation of the monitoring target according to the second echo signal

S400

Compute a vertical displacement and/or a horizontal displacement of the monitoring target according to mounting parameters of a radar device, the first line-of-sight deformation and the second line-of-sight deformation

Fig. 3

Amplitude/dB

Fig. 4

Fig. 5

Fig. 6

S410

Compute a first angle of incidence from the radar device to the first monitoring point according to the mounting parameters of the radar device

S420

Compute a second angle of incidence from the radar device to the second monitoring point according to the mounting parameters of the radar device

S430

Compute a second angle of incidence from the radar device to the second monitoring point according to the mounting parameters of the radar device

Fig. 7

S500

Obtain an echo signal of a monitoring point of a monitoring target

S600

Obtain a line-of-sight deformation of the monitoring target according to the echo signal

S700

Compute a vertical displacement and/or a horizontal displacement of the monitoring target according to mounting parameters of a radar device and the line-of-sight deformation

Fig. 8

Monitoring target

l

Δr

Monitoring
point

h

θ

r

Rada

Fig. 9

z

p

H

R2    R1

q   k    o

y

x

Fig. 10

Fig. 11

## INTERNATIONAL SEARCH REPORT

International application No.

**PCT/CN2021/081219**

### A.  CLASSIFICATION OF SUBJECT MATTER

G01B 15/06(2006.01)i;  G01S 13/88(2006.01)i

According to International Patent Classification (IPC) or to both national classification and IPC

### B.  FIELDS SEARCHED

Minimum documentation searched (classification system followed by classification symbols)

G01B 15, G01B 7, G01S 13, G01S 7, G01C

Documentation searched other than minimum documentation to the extent that such documents are included in the fields searched

Electronic data base consulted during the international search (name of data base and, where practicable, search terms used)

VEN; CNABS; CNTXT; CNKI: 形变, 变形, 位移, 移位, 偏移, 沉降, 雷达, 射频, 微波, 干涉, 视线, 视向, 径向, 垂直, 竖直, 纵向, 水平, 横向, deform+, strain+, distort+, displace+, deviation, offset+, radar, microwave, radio frequency, interfer+, INSAR, GBSAR, line, sight, visual, vision, LOS, vertical+, perpendicular+, horizontal

### C.  DOCUMENTS CONSIDERED TO BE RELEVANT

| Category* | Citation of document, with indication, where appropriate, of the relevant passages | Relevant to claim No. |
|---|---|---|
| X | CN 108050964 A (CHANGSHA SENSINTEL INFORMATION TECHNOLOGY CO., LTD.) 18 May 2018 (2018-05-18) description, paragraphs [0006]-[0122], and figures 1-7 | 1-12 |
| X | 刘明亮 等 (LIU, Mingliang et al.). "基于地基干涉雷达的超高层动态变形监测 (Super High-rise Dynamic Deformation Monitoring Based on Ground-Based Interferometric Radar)" 北京测绘 (*Beijing Surveying and Mapping*), Vol. 33, No. 7, 31 July 2019 (2019-07-31), ISSN: 1007-3000, pp. 829-834 | 1-12 |
| X | CN 207456374 U (CHANGSHA SHENZHITONG INFORMATION TECHNOLOGY CO., LTD.) 05 June 2018 (2018-06-05) description, paragraphs [0019]-[0055], and figures 1-3 | 1-12 |
| X | CN 108387892 A (SHANGHAI JIAO TONG UNIVERSITY) 10 August 2018 (2018-08-10) description, paragraphs [0067]-[0089], and figures 1-5 | 1-12 |

☑ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 June 2021** | **17 June 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/081219**

### C. DOCUMENTS CONSIDERED TO BE RELEVANT

| Category* | Citation of document, with indication, where appropriate, of the relevant passages | Relevant to claim No. |
|---|---|---|
| X | 刘春 等 (LIU, Chun et al.). "基于地基干涉雷达的大型桥梁动态挠度监测与分析 (Monitoring Dynamic Deflection of Large Bridge by Using Ground-Based Interferometric Radar)" 工程勘察 (*Geotechnical Investigation & Surveying*), No. 1, 31 December 2017 (2017-12-31), ISSN: 1000-1433, pp. 53-58 | 1-12 |
| PX | CN 111351424 A (INNER MONGOLIA LEIYUAN INFORMATION TECHNOLOGY CO., LTD.) 30 June 2020 (2020-06-30) claims 1-12 | 1-12 |
| A | US 8154435 B2 (MICROSOFT CORP.) 10 April 2012 (2012-04-10) entire document | 1-12 |
| A | US 2011248882 A1 (IDS INGEGNERIA DEI SISTEMI S.P.A.) 13 October 2011 (2011-10-13) entire document | 1-12 |
| A | 邵泽龙 (SHAO, Zelong). "基于FMCW GBSAR的微形变监测技术研究 (Research on Micro-Deformation Monitoring Technology Based on FMCW GBSAR)" 中国博士学位论文全文数据库 基础科学辑 (*Chinese Doctoral Dissertations Full-Text Database (Basic Sciences)*), No. 8, 15 August 2019 (2019-08-15), ISSN: 1674-022X, section 3.4.3 | 1-12 |

Form PCT/ISA/210 (second sheet) (January 2015)

**INTERNATIONAL SEARCH REPORT**
Information on patent family members

International application No.

**PCT/CN2021/081219**

| Patent document cited in search report | | | Publication date (day/month/year) | Patent family member(s) | | | Publication date (day/month/year) |
|---|---|---|---|---|---|---|---|
| CN | 108050964 | A | 18 May 2018 | None | | | |
| CN | 207456374 | U | 05 June 2018 | None | | | |
| CN | 108387892 | A | 10 August 2018 | None | | | |
| CN | 111351424 | A | 30 June 2020 | None | | | |
| US | 8154435 | B2 | 10 April 2012 | US | 2010045513 | A1 | 25 February 2010 |
| US | 2011248882 | A1 | 13 October 2011 | EP | 2382487 | A1 | 02 November 2011 |
| | | | | AU | 2009335225 | A1 | 07 July 2011 |
| | | | | IT | 1392524 | B1 | 09 March 2012 |
| | | | | WO | 2010076037 | A1 | 08 July 2010 |
| | | | | IT | PI20080139 | A1 | 01 July 2010 |

Form PCT/ISA/210 (patent family annex) (January 2015)

**EP 4 130 653 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010244765